Europäisches Patentamt

European Patent Office

Office européen des brevets

(19)

(11) Publication number: **0 125 924**
**B1**

## (12) EUROPEAN PATENT SPECIFICATION

(45) Date of publication of patent specification: **10.08.88**

(21) Application number: **84303280.6**

(22) Date of filing: **15.05.84**

(51) Int. Cl.⁴: **F 01 K 3/00**, G 21 D 5/12, F 22 B 3/04

(54) **Start-up systems and start-up vessels for such systems.**

(30) Priority: **16.05.83 US 495190**

(43) Date of publication of application:
**21.11.84 Bulletin 84/47**

(45) Publication of the grant of the patent:
**10.08.88 Bulletin 88/32**

(84) Designated Contracting States:
**DE FR GB IT**

(56) References cited:
**CH-A- 343 716**
**FR-A-2 366 444**
**US-A-3 114 414**

(73) Proprietor: **THE BABCOCK & WILCOX COMPANY**
**1010 Common Street P.O. Box 60035**
**New Orleans Louisiana 70160 (US)**

(72) Inventor: **Durrant, Oliver**
**4493 Larkspur Lane**
**Akron Ohio 44313 (US)**
Inventor: **Kakarala, Chandrasekhara**
**5974 Mustang Drive**
**Clinton Ohio 44216 (US)**
Inventor: **Mandel, Sheldon W.**
**1703 Bridge Avenue**
**Galesburg Illinois 61401 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to start-up systems and start-up vessels for such systems. More particularly, but not exclusively, the invention relates to the control of processes for generating steam and, in particular, to a reflux condensing start-up system and vessel particularly suitable for liquid metal fast breeder reactors.

The control and operation of nuclear reactors, in particular, liquid metal fast breeder reactors (LMFBRs), is disclosed in Proceedings of the Third Power Plant Dynamics, Control and Testing Symposium, T. W. Kerlin Edgar, University of Tennessee 1977, papers 8, 17, 19 and 20. These papers disclose various approaches to the control of such reactors and the response of such reactors to various normal and abnormal conditions.

Schemes for controlling both nuclear and conventional steam generating reactors are also disclosed in US Patents Nos. US-A-3 894 396 (issued 15th July 1975) and US-A-4 061 533 (issued 6th December 1977) both to Durrant. These two patents are incorporated here by reference.

Steam generating reactors and, in particular, nuclear reactors, require careful handling and control during start-up operations which bring the steam generating equipment from ambient conditions up to full pressure and output.

The present invention provides a start-up vessel comprising:

a lower bulb defining a lower space;

an upper bulb defining an upper space;

a mid-section of a cross-sectional diameter less than that of the lower and upper bulbs, the mid-section defining a mid-space and being connected between the upper and lower bulbs;

heating means associated with the lower bulb for heating water in the lower space;

at least one inlet conduit connection connected to one of the upper space, lower space and mid-space for admitting feedwater to the lower space to be heated by the heating means to produce steam; and

at least one outlet conduit connection connected to one of the upper space, lower space and mid-space for discharging steam.

The invention also provides a reflux condensing start-up system comprising:

a start-up vessel as set forth above, in which the inlet conduit connection provides a feedwater inlet for admitting water and the outlet conduit connection provides a steam outlet for discharging steam;

a steam generator having a heat-transfer fluid inlet for admitting a heat transfer fluid, a heat transfer fluid outlet for discharging the heat transfer fluid, a feedwater inlet for admitting water and a steam outlet for discharging steam;

a main steam line connected to the steam outlets of the steam generator and start-up vessel;

a steam turbine having an inlet connected to the main steam line and an outlet;

a steam condenser connected to the outlet of the turbine;

a steam return line connected between the outlet of the turbine and an inlet of the condenser;

a feedwater line connected between an outlet of the condenser and the feedwater inlet of the steam generator;

at least one feedwater pump connected in the feedwater line for pumping water to the steam generator;

a start-up line connected between the feedwater line, at a point of connection downstream of the pump, and the steam return line;

a start-up line valve in the start-up line;

a steam generator inlet valve in the feedwater line downstream of said point of connection;

a start-up vessel inlet line connected between the feedwater inlet of the start-up vessel and the start-up line;

a start-up vessel inlet valve in the start-up vessel inlet line; and

a start-up vessel outlet valve between the steam outlet of the start-up vessel and the main steam line;

whereby the valves can be selectively positioned and the start-up vessel heating means can be operated to supply feedwater to the start-up vessel to generate steam which is supplied to the steam line and the steam generator to warm up and begin the operation of the turbine.

By appropriate control of the valves and the heater in the start-up vessel, feedwater can first be used to flush the system and then to supply water to the start-up vessel where it is heated to generate steam. The steam can be utilised to warm up and begin the turbine rolling, and also to pressurise the steam generator which is thereafter supplied with feedwater to be heated by the heat transfer fluid, which is preferably supplied from a reactor.

A preferred start-up vessel and a preferred start-up system embodying the invention are described in detail below with reference to the accompanying drawings. Firstly, however, some salient features of the preferred vessel and system will be outlined.

The preferred start-up system comprises a start-up vessel which is used in conjunction with a steam generator to initially flush and then pressurise the steam generator for use in generating steam to drive a turbine or other steam using equipment.

An immersion heater is used at a lower portion of the start-up vessel to generate steam from feedwater supplied to the bottom of the vessel, which steam is utilised to pressure the system.

The vessel is preferably designed in accordance with the ASME Boiler and Pressure vessel code, section III.

The preferred arrangement eliminates, in a once-through steam generator, the conventional circulation during initial stages of the warm-up or start-up regime. Additionally, well-defined and easy to establish water level locations during start-up, shut-down and other low situations can be obtained, thereby avoiding the conventional need for feedwater flow control. Steam generation for start-up can be provided through any source of heat, such as electric, gas, oil, or the like. The preferred system provides an efficient reflux condenser with condensation occurring at all tube side heat transfer surfaces in the steam generator.

The preferred start-up vessel can provide multiple functions, such as those of a mixing tank, a water storage tank and a level control for feedwater at low loads.

It is never necessary to circulate water within the preferred system, including the main steam line for start-up, thereby eliminating the problem of water carryover to the steam turbine.

The use of a resistor-type level control static pressure equalisation line between the vessel and the main steam line is also provided in the preferred system, whereby it is possible to leave the static pressure equalisation line open at all times.

Venting of non-condensibles from the preferred system is facilitated by the use of a primary heat source to drive the heavier gases (air, etc.) out of the system.

The basic configuration of the preferred start-up vessel is flexible and can be optimised to reduce cost, increase water storage and reap other benefits.

When used with a once-through steam generator design, the preferred start-up system acts like a pot boiler and performs on line as a once-through boiler.

The preferred start-up vessel includes upper and lower bulbs with a smaller diameter mid-section defining an inner space for feedwater and steam. The upper bulb volume provides water storage to minimise difficulties during transients. Direct contact auxiliary feedwater heating is accomplished using a by-pass line off the main steam line which is provided through the upper bulb of the vessel, thereby ensuring the high feedwater temperature necessary for a sodium heated steam generator.

The preferred reflux condensing start-up system and vessel are simple in design, rugged in construction and economical to manufacture.

The invention will now be further described, by way of illustrative and non-limiting example, with reference to the accompanying drawings, in which.

Figure 1 is a schematic representation of a start-up system embodying the invention; and

Figure 2 is a side elevational view of a start-up vessel embodying the invention.

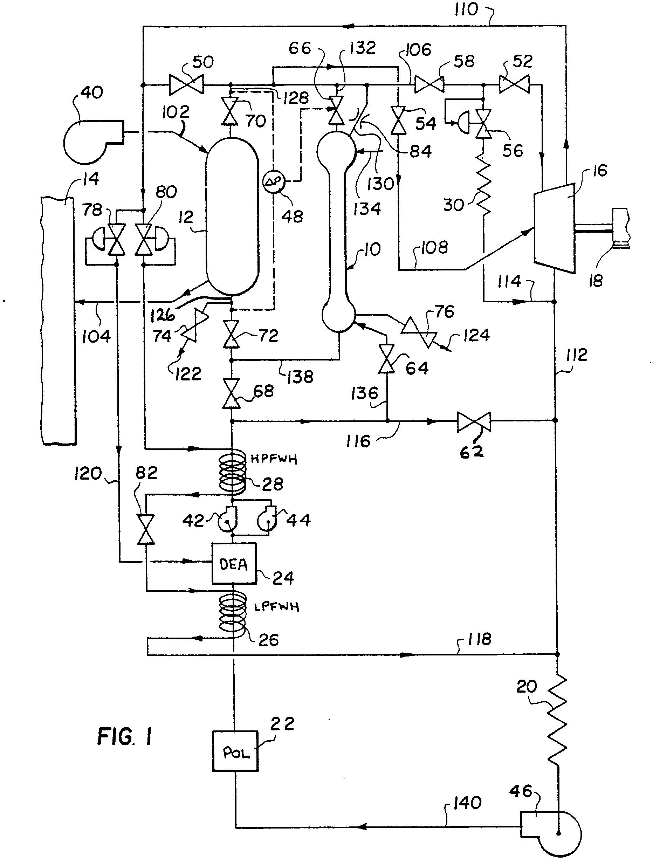

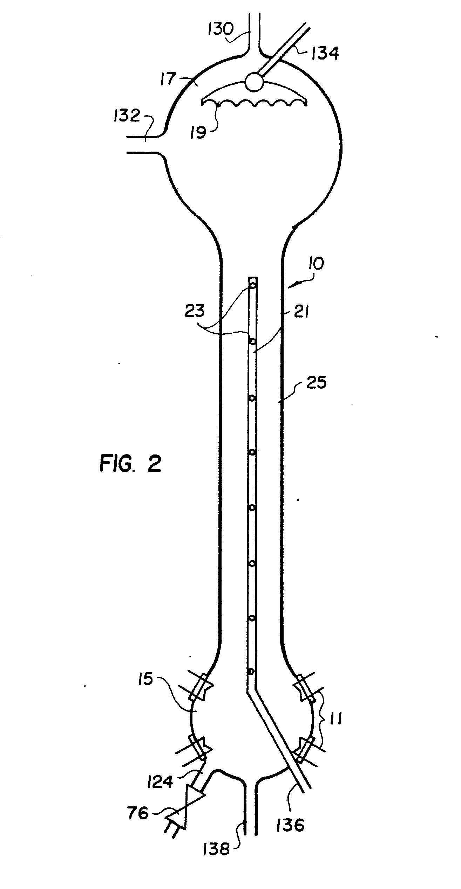

Referring to the drawings, Figure 1 shows a reflux condensing start up system which includes a start-up vessel 10 having inlets and outlets connected to inlets and outlets of a steam generator 12. As shown in Figure 2, one or more immersion heaters 11 are provided in the lower end of the vessel 10. The immersion heater(s) 11 may be of any suitable type for generating steam from feedwater which is also supplied to the vessel 10. Alternatively, steam lines or any other source of heat can be provided at the location(s) 11.

After start-up, heat is supplied to the steam generator 12 by a reactor 14 which, in particular, may be of the Liquid Metal Fast Breeder Reactor (LMFBR) type. Heat transfer fluid, for example liquid sodium, is provided over a heat transfer fluid inlet line 102 and pumped by a sodium pump or pumps 40. The sodium transfers its heat to water moving in independent conduits in the steam generator 12 and is then discharged via a heat transfer fluid outlet line l04. The steam generated in the start-up vessel 10 or steam generator 12 is provided via a main steam line l06 to a turbine 16. The turbine 16 may drive a shaft which is connected to an electric generator 18, for example.

Steam that has been used in turning the turbine 16 is transported over a turbine outlet or condenser inlet line 112 to a condenser 20. A condensate and feedwater system line 140 connects the outlet of the condenser 20 to a feedwater inlet line 126 of the steam generator 12. The condensate and feedwater system line 140 includes a condenser or condensate pump 46 for pumping the feedwater, a polisher 22 for removing impurities from the feedwater, a low pressure feedwater heater 26, a deaerator 24, parallel connected main and start-up feedwater pumps 42 and 44, respectively, a high pressure feedwater heater 28, a steam generator feedwater control valve 68 and a steam generator inlet isolation valve 72. A steam outlet line 128 connects the steam outlet of the steam generator 12 to the main steam line 106 via an isolation valve 70 provided for controlling the passage of steam from the steam generator 12 during full operation and the passage of steam to the steam generator 12 during start-up operations.

A feedwater flow and vessel level controller 48 is connected to the inlets and outlets of the steam generator 12 and has a control connection to a start-up vessel outlet valve 66 which is disposed in a start-up vessel steam outlet line 132. The controller 48 controls the level in both the steam generator 12 and the start-up vessel 10 when they are inter-connected.

A start-up line 116 for feedwater is connected between the condensate and feedwater system line or main feedwater line 140, at a point of connection downstream of all of the pumps, and the condenser inlet lines 112. A start-up line valve 62 is disposed in the line 116.

The start-up vessel 10 has a feedwater outlet line 138 connected at the bottom thereof to the main feedwater line 140 between valves 68 and 72. A feedwater inlet line 136 having a start-up vessel inlet valve 64 is connected to the lower end of the vessel 10. The vessel 10 is also provided with a blow-down line 124 having blow-down valves 76 therein. The upper end of the vessel 10 is provided with a static pressure equalisation line 130 that is connected to the main steam line 106 and is provided with one or more flow restrictors 84 which, for example, may be throttles. The line 130 may remain open throughout the operation of the system. An auxiliary feedwater line 134 is also connected to the top of the vessel 10.

The steam generator 12 includes a vent line 122 having vent valves 74.

A turbine prewarming line 108 connects the main steam line 106 to the turbine 16 and includes a warm-up valve 54. A turbine by-pass line 114 connects the main steam line 106 to the condenser inlet line 112 and is provided with a valve 56 and a desuperheater 30. The main steam line 106 includes a main steam line valve 58 upstream of the by-pass line 114 and a turbine stop valve 52 downstream of the line 114. The condenser inlet line 112 is provided at a location downstream of the connection with the by-pass line 114.

To supply steam for the low and high pressure feedwater heaters 26, 28, as well as the deaerator 24, steam is extracted from the turbine 16 over multiple steam extraction line(s) 110 which is provided with a high pressure feedwater heater inlet valve 80 and heater drain valve(s) 82. One extraction line 110 is a deaerator line 120 with a deaerator inlet valve 78. If additional steam is necessary to maintain the feedwater temperature at the desired level for the sodium circulation system, an extraction line valve 50 may be opened to provide steam from the main steam line l06 directly to the extraction line(s) 110. After the steam has passed the low pressure feedwater heater 26, it is returned through a feedwater heater drain line 118 back to the condenser inlet line 112.

Figure 2 shows the start-up vessel 10 and its various connections to the system of Figure 1.

The vessel 10 includes a lower bulb 15 which is connected to an upper bulb 17 over a midsection 25 having a smaller cross-sectional diameter than the diameters of either the lower or upper bulbs. The auxiliary feedwater line 134 is connected to one or more nozzles 19 which can spray water in the upper bulb 17 and is preferably positioned at the lower portion of the upper bulb 17 for maximum pressure differential. Feedwater is provided over the feedwater inlet line 136, which extends through the lower bulb 15 and up into a distribution line or distributor 21 which has a plurality of spaced openings 23 for distributing feedwater in the mid-section 25 and lower bulb 15.

The start-up vessel can be isolated and removed from the system by means of the valves 64 and 66 and the steam generator 12 cah be isolated and removed from the system by means of the valves 72 and 70.

The physical height of the start-up vessel 10 is of sufficient size to provide any desired maximum static head capacity with the point of connection of the feedwater inlet line 136 for the vessel 10 being below the vent line 122. The distributor 21 is provided to permit effective mixing of incoming feedwater with steam in the vessel 10. Generally, the elevation of the lower bulb 15 of the vessel 10 will be below the steam generator 12 and the elevation of the upper shell of the vessel will be approximately the same as the steam generator.

Storage requirements for transients associated with loss of feedwater are provided in the bulbs or bulb portions 15 and 17. Auxiliary feedwater which is introduced through the spray nozzle or nozzles 19 comes into direct heat transfer contact with by-pass steam provided through the line 132 when the valve 66 is open. This structure thus provides protection when the main feedwater flow is interrupted.

During a normal scram, as is known in the prior art, the reactor 14 trips, the turbine 16 trips, and, in turn, the sodium pump or pumps 40 will trip. The system coasts down and pony motors (not shown) are operated. The main feedwater pump 42 also trips but the start-up pump 44 is continued in its operation to feed water to the start-up vessel 10. The static pressure equalisation line 130 is maintained in its open condition and prevents over-pressurisation of the vessel 10. If a valve is provided in the line 130, this valve is immediately opened.

Feedwater flow is controlled through the start-up line 116 by the valves 62 (normally closed) and 64 to maintain a level in the start-up vessel 10 between a maximum and minimum position after mix level is achieved. At this point, the sodium inlet temperature is dictated by the reactor system. Steam outlet temperature follows the sodium inlet temperature. The sodium outlet temperature is limited by the feedwater inlet temperature and is determined by the minimum water level and the feedwater flow rate (i.e. power level). For a fixed level, sodium inlet temperature transient should be evaluated to determine the need for programmed water level. If necessary, the minimum water level to control the sodium outlet temperature transient is programmed.

Consideration can also be given to maintaining the pressurised reactor vessel (PRV) pressure setting at a high level and ramping up the high pressure heater shell pressure to full load pressure. This is all for the purpose of delaying the loss of sodium temperature.

For normal start-up the sequence of operations is as follows.

After the usual leakage testing for the steam generator 12, the valves 64 and 68 are closed with the valve 62 being opened. The condensate pump 46 is operated to circulate feedwater through the polisher 22 to bring the feedwater to a required level of purity. Additional feedwater cleanup can occur during the warm-up operation.

The valves 64, 68 and 72 are then opened to admit a predetermined amount of feedwater to the vessel 10 to a level which is below the vent line 122 of the steam generator 12. The vent valve 74 is left open. The heater(s) 11 in the vessel 10 are activated to heat water and generate steam. The steam generator 12 is purged of heavier non-condensates such as air through the vent line 122. When venting is completed, the vent valve 74 is closed and heating continues. Feedwater is introduced to the steam generator 12 through the valve 72 and the steam generator and the start-up vessel 10 are maintained at minimum water level of operation Heating takes place at the required rates with the steam generator 12 acting as a reflux condenser for the steam generated in the start-up vessel 10.

When the start-up vessel 10 and steam generator 12 reach 149°C (483 kPa) — equivalent to 300°F (70 lbf/in²) — turbine prewarming begins over the line 108 with the valve 54 open. The valve 50 is also opened to provide steam to the high pressure feedwater heater 28 and the deaerator 24 at suitable predetermined pressure set points for the valves 80 and 78, respectively. This requires make-up water to maintain the necessary start up water level. The addition of make-up water is accomplished through the start-up line 116 by adjusting the setting of the valve 62 and the (normally closed) valve 64. During this phase, the start-up vessel 10 is also utilised as a mixing tank. Auxiliary steam flow to the feedwater heaters also begins at this point.

When at 204°C (400°F), sodium is introduced by the pump 40 via the line 102 into the steam generator 12 and circulated at full load flow rate. Pump heat (and energy for the immersion heaters 11) will continue to heat the system to 7.17 MPa absolute (288°C) — equivalent to 1040 lbf/in² absolute (550°F) — which will be used as the rolling pressure.

Upon achieving the rolling pressure, the reactor 14 is started and increased to about 8% power. Sodium flow rate is reduced from 100% to 24% (this will yield a 56°C (100°F) sodium in/out temperature difference). Sodium outlet temperature at the line 104 is allowed to remain at 288°C (550°F), while the inlet temperature rises to 343°C (650°F). Letting the outlet steam come to 343°C (650°F) at 7.21MPa (1046 lbf/in²), the inlet feedwater temperature is set at 210°C (410°F) at a flow rate of 8% full flow.

The steam flow is split by opening the valve 56 to a certain extent so that, of the 8% steam being produced, approximately 3% of the full load flow goes to the turbine 16 via the line 106 and the valve 52 (which is also opened) for roll-up and the remaining is diverted to the condenser 20 via the line 114.

When the turbine comes to synchronous speed, in about one hour after start of rolling, an 8% electric load is placed on the turbine-driven generator 18 as the entire 8% steam flow is directed through the turbine 16 by adjusting the valves 56 and 52.

Conditions of pressure and temperature remain fixed until the load is increased to 15%. This is done by adjusting the turbine valves so that they are in the same position as they would be at a 40% load. To achieve this, the water flow will ramp up to 50% while the sodium flow will ramp up to 40 to 45%. Note that, at about 15%-20% steam flow, the water level control will peak out and feedwater flow is then controlled by reactor power a steam temperature (superheat). This takes about 30 minutes.

At 15% reactor power, all operation conditions will ramp to the design conditions of 40% of full load.

## Claims

1. A start-up vessel (10) comprising:
a lower bulb (15) defining a lower space;
an upper bulb (17) defining an upper space;
a mid-section (25) of a cross-sectional diameter less than that of the lower and upper bulbs (15, 17), the mid-section defining a mid-space and being connected between the upper and lower bulbs;
heating means (11) associated with the lower bulb (15) for heating water in the lower space;
at least one inlet conduit connection (136) connected to one of the upper space, lower space and mid-space for admitting feedwater to the lower space to be heated by the heating means (11) to produce steam; and
at least one outlet conduit connection (130) connected to one of the upper space, lower space and mid-space for discharging steam.

2. A start-up vessel according to claim 1, wherein the lower bulb (15) is of a smaller diameter than the upper bulb (17) and both the upper and lower bulbs are generally spherical in shape.

3. A start-up vessel according to claim 1 or claim 2, wherein the heating means (11) comprises a plurality of immersion heaters extending into the lower space.

4. A start-up vessel according to claim 1, claim 2 or claim 3, wherein the inlet conduit connection comprises a feedwater line (136) extending through the lower bulb (15) and a distribution line (21) extending upwardly from the feedwater line (136) into the mid-space, the distribution line (21) having a plurality of openings (23) vertically distributed therealong for admixing feedwater supplied through the feedwater line with steam in the upper space, lower space and mid-space.

5. A start-up vessel according to claim 4, including an auxiliary feedwater line (134) connected through the upper bulb (17) and having at least one nozzle (19) at the end thereof for spraying feedwater into the upper space.

6. A start-up vessel according to claim 4 or claim 5 including a main steam inlet, connection (132) connected to the upper bulb (17) and a static pressure equalisation line connection (130) connected to the upper bulb.

7. A start-up vessel according to claim 4, claim 5 or claim 6, including a blowdown line connection (124) connected to the lower bulb (15) and a feedwater drain connection (138) connected to the lower bulb.

8. A reflux condensing start-up system comprising:
a start-up vessel (10) according to any one of claims 1 to 7, in which the inlet conduit connection (136) provides a feedwater inlet for admitting water and the outlet conduit connection (130) provides a steam outlet for discharging steam;
a steam generator (12) having a heat-transfer fluid inlet for admitting a heat transfer fluid, a heat transfer fluid outlet for discharging the heat transfer fluid, a feedwater inlet for admitting water and a steam outlet for discharging steam;

a main steam line (106) connected to the steam outlets of the steam generator (12) and start-up vessel (10);

a steam turbine (16) having an inlet connected to the main steam line (106) and an outlet;

a steam condenser (20) connected to the outlet of the turbine (16);

a steam return line (112) connected between the outlet of the turbine (16) and an inlet of the condenser (20);

a feedwater line (140) connected between an outlet of the condenser (20) and the feedwater inlet of the steam generator (12);

at least one feedwater pump connected in the feedwater line (140) for pumping water to the steam generator (12);

a start-up line (116) connected between the feedwater line (140), at a point of connection downstream of the pump, and the steam return line (112).

a start-up line valve (62) in the start-up line (116);

a steam generator inlet valve (68) in the feedwater line (140) downstream of said point of connection;

a start-up vessel inlet line (136) connected between the feedwater inlet of the start-up vessel (10) and the start-up line (116);

a start-up vessel inlet valve (64) in the start-up vessel inlet line (136); and

a start-up vessel outlet valve (66) between the steam outlet of the start-up vessel (10) and the main steam line (106);

whereby the valves can be selectively positioned and the start-up vessel heating means (11) can be operated to supply feedwater to the start-up vessel (10) to generate steam which is supplied to the steam line (106) and the steam generator (12) to warm up and begin the operation of the turbine (16).

9. A reflux condensing start-up system according to claim 8, including a high pressure feedwater heater (28) associated with the feedwater line (140), a deaerator heater (24) associated with the feedwater line (140), a low pressure feedwater heater (26) associated with the feedwater line (140) and positioned upstream of the deaerator heater (24), and extraction lines (110) and a regenerative feedwater heater system for extracting steam from various stages of the turbine (16) and connected to the feedwater heaters (28, 26) that are in series connection with the feedwater line (140), the extractor lines (110) being connected through the feedwater heaters (28, 26) and a feedwater heater drainer (118) to the steam return line (112).

10. A reflux condensing start-up system according to claim 9, including a polisher (22) in the feedwater line (140), the at least one pump comprising a condenser pump (46) positioned between the condenser (20) and the polisher (22).

11. A reflux condensing start-up system according to claim 10, including a main feedwater pump (42) connected in the feedwater line (140) between the deaerator heater (24) and the high pressure feedwater heater (28) and a start-up pump (44) connected in parallel to the main feedwater pump (42).

12. A reflux condensing start-up system according to any one of claims 8 to 11, including a steam generator vent line (122) connected in the feedwater line (140) downstream of the steam generator inlet valve (68), the feedwater inlet of the start-up vessel (10) being connected to the start-up vessel at a level below the connection between the vent line (122) and the feedwater line (140), and a vent valve (72) in the vent line (122) whereby water supplied to the start-up vessel (10) via the feedwater line (140) fills the vessel (10) up to the level of the connection between the vent line (122) and the feedwater line (140).

13. A reflux condensing start-up system according to any one of claims 8 to 12, including a turbine by-pass line (114) connected between the main steam line (106) and the steam return line (112) and having a turbine by-pass valve (56) and a desuperheater (30).

14. A reflux condensing start-up system according to claim 13, including a turbine prewarming line (108) connected between the main steam line (106) and the turbine (16) and having a prewarming valve (54) therein for supplying steam to prewarm the turbine.

**Patentansprüche**

1. Anfahrbehälter (10) mit:

einem einen unteren Raum bildenden unteren Kolben (15); einem einen oberen Raum bildenden oberen Kolben (17); einem Mittelabschnitt (25) kleineren Querschnittsdurchmessers als der des unteren und oberen Kolbens (15, 17), wobei der Mittelabschnitt einen Mittelraum bildet und zwischen dem oberen und unteren Kolben angeschlossen ist; Heizmitteln (11), welche zum Erwärmen von Wasser in dem unteren Raum dem unteren Kolben (15) zugeordnet sind; wobei mindestens eine Einlaßleitungsverbindung (136) mit dem oberen Raum, dem unteren Raum oder dem Mittelraum verbunden ist zum Zuführen von Speisewasser zu dem unteren Raum, welches zur Erzeugung von Dampf durch das Heizmittel (11) erwärmt werden soll; und

mindestens eine Auslaßleitungsverbindung (130) mit dem oberen Raum, dem unteren Raum oder dem Mittelraum für das Ausströmen von Dampf verbunden ist.

2. Anfahrbehälter nach Anspruch 1, wobei der untere Kolben (15) einen kleineren Durchmesser hat als der obere Kolben (17) und sowohl der obere als auch der untere Kolben im allgemeinen Kugelgestalt haben.

3. Anfahrbehälter nach Anspruch 1 oder Anspruch 2, wobei das Heizmittel (11) eine Mehrzahl von sich in den unteren Raum erstreckenden Tauchsiedern aufweist.

4. Anfahrbehälter nach Anspruch 1, Anspruch 2 oder Anspruch 3, wobei die Einlaßleitungsverbindung eine Speisewasserleitung (136) aufweist, welche sich durch den unteren Kolben (15) erstreckt, und eine Verteilungsleitung (21) aufweist, welche sich von der Speisewasserleitung (136) in den Mittelraum hinein nach oben erstreckt, wobei die Verteilungsleitung (21) eine Mehrzahl von Öffnungen (23) hat, die längs der Leitung verteilt sind zum Zuführen von Speisewasser, welches durch die Speisewasserleitung zugeführt ist mit Dampf im oberen Raum, unteren Raum und mittleren Raum.

5. Anfahrbehälter nach Anspruch 4, mit einer Hilfsspeisewasserleitung (134), die über den oberen Kolben (17) verbunden ist und an ihrem Ende zum Einsprühen von Speisewasser in den oberen Raum mindestens eine Düse (19) hat.

6. Anfahrbehälter nach Anspruch 4 oder Anspruch 5, mit einer Hauptdampfeinlaßverbindung (132), die mit dem oberen Kolben (17) verbunden ist, und einer Abgleichleitungsverbindung (130) für statischen Druck, die mit dem oberen Kolben verbunden ist.

7. Anfahrbehälter nach Anspruch 4, Anspruch 5 oder Anspruch 6, mit einer Einblasleitungsverbindung (124), die mit dem unteren Kolben (15) verbunden ist, und einer Speisewasserentleerungsverbindung (138), die mit dem unteren Kolben verbunden ist.

8. Ein Refluxkondensier-Anfahrsystem mit:

einem Anfahrbehälter (10) gemäß einem der Ansprüche 1 bis 7, in welchem die Einlaßleitungsverbindung (136) einen Speisewassereinlaß schafft für das Zuführen von Wasser und die Auslaßleitungsverbindung (130) einen Dampfauslaß schafft für das Ausströmen von Dampf;

einem Dampfgenerator (12) mit einem Wärmeübertragungsfluideinlaß für das Zuführen eines Wärmeübertragungsfluids, einem Wärmeübertragungsfluidauslaß zum Ausströmen des Wärmeübertragungsfluids, einem Speisewassereinlaß für das Zuführen von Wasser und einem Dampfauslaß für das Ausströmen von Dampf;

einer Hauptdampfleitung (106), die mit den Dampfauslässen des Dampfgenerators (12) und des Anfahrbehälters (10) verbunden ist;

einer Dampfturbine (16) mit einem Einlaß, der mit der Hauptdampfleitung (106) verbunden ist, und einem Auslaß;

einem Dampfkondensator (20), der mit dem Auslaß der Turbine (16) verbunden ist;

einer Dampfrücklaufleitung (112), die zwischen dem Auslaß der Turbine (16) und einem Einlaß des Kondensators (20) verbunden ist;

einer Speisewasserleitung (140), die zwischen einem Auslaß den Kondensators (20) und dem Speisewassereinlaß des Dampfgenerators (12) verbunden ist;

mindestens einer Speisewasserpumpe, die in der Speisewasserleitung (140) verbunden ist für das Pumpen von Wasser zum Dampfgenerator (12);

einer Anfahrleitung (116), die zwischen der Speisewasserleitung (140) an einer Verbindungsstelle abstromig von der Pumpe und der Dampfrücklaufleitung (112) verbunden ist;

einem Anfahrleitungsventil (62) in der Anfahrleitung (116);

einem Dampfgeneratoreinlaßventil (68) in der Speisewasserleitung (140) abstromig von der Verbindungsstelle;

einer Anfahrbehältereinlaßleitung (136), die zwischen dem Speisewassereinlaß des Anfahrbehälters (10) und der Anfahrleitung (116) verbunden ist;

einem Anfahrbehältereinlaßventil (64) in der Anfahrbehältereinlaßleitung (136); und

einem Anfahrbehälterauslaßventil (66) zwischen dem Dampfauslaß des Anfahrbehälters (10) und der Hauptdampfleitung (106);

wobei die Ventile wahlweise angeordnet sein können und das Anfahrbehälterheizmittel (11) betrieben werden kann, um Speisewasser zum Anfahrbehälter (10) zuzuführen und Dampf zu erzeugen, welcher der Dampfleitung (106) und dem Dampfgenerator (12) zugeführt wird, um die Turbine (16) aufzuwärmen und ihren Betrieb zu beginnen.

9. Refluxkondensier-Anfahrsystem nach Anspruch 8, mit einem Hochdruckspeisewassererwärmer (28), welcher der Speisewasserleitung (140) zugeordnet ist, einem der Speisewasserleitung (140) zugeordneten Entlüftungserwärmer (24), einem Niederdruckspeisewassererwärmer (26), welcher der Speisewasserleitung (140) zugeordnet und aufstromig von dem Entlüftungserwärmer (24) angeordnet ist, und Extraktionsleitungen (110) und einem regenerativen Speisewassererwärmersystem zum Extrahieren von Dampf aus verschiedenen Stufen der Turbine (16), mit den Speisewassererwärmern (28, 26) verbunden, die in Reihe mit der Speisewasserleitung (140) verbunden ist, wobei die Extraktionsleitungen (110) über die Speisewassererwärmer (28, 26) und eine Speisewassererwärmerentleerungseinrichtung (118) mit der Dampfrücklaufleitung (112) verbunden sind.

10. Refluxkondensier-Anfahrsystem nach Anspruch 9, mit einer Glättungseinrichtung (22) in der Speisewasserleitung (140), wobei mindestens eine Pumpe eine Kondensationspumpe (46) aufweist, die zwischen dem Kondensator (20) und der Glättungseinrichtung (22) angeordnet ist.

11. Refluxkondensier-Anfahrsystem nach Anspruch 10, mit einer Hauptspeisewasserpumpe (42), die in der Speisewasserleitung (140) zwischen dem Entlüftungserwärmer (24) und dem Hochdruckspeisewassererwärmer (28) verbunden ist, und einer Anfahrpumpe (44), die parallel zur Hauptspeisewasserpumpe (42) verbunden ist.

12. Refluxkondensier-Anfahrsystem nach einem der Ansprüche 8 bis 11, mit einer Dampfgeneratorentlüftungsleitung (122), die in der Speisewasserleitung (140) abstromig von dem Dampfgeneratoreinlaßventil (68) verbunden ist, wobei der Speisewassereinlaß des Anfahrbehälters (10) mit dem Anfahrbehälter an einem Niveau unter der Verbindung zwischen der Entlüftungsleitung (122) und der Speisewasserleitung (140) verbunden ist, und einem Entlüftungsventil (72) in der Entlüftungsleitung (122), wodurch dem Anfahrbehälter (10) über die Speisewasserleitung (140) zugeführtes Wasser den Behälter (10) bis zu dem Niveau der Verbindung zwischen der Entlüftungsleitung (122) und der Speisewasserleitung (140) füllt.

13. Refluxkondensier-Anfahrsystem nach einem der Ansprüche 8 bis 12, mit einer Turbinenbypaßleitung (114), die zwischen der Hauptdampfleitung (106) und der Dampfrückführleitung (112) verbunden ist und ein Turbinenbypaßventil (56) sowie einen Heißdampfkühler (30) hat.

14. Refluxkondensier-Anfahrsystem nach Anspruch 13, mit einer Turbinenvorwärmleitung (108), die zwischen der Hauptdampfleitung (106) und der Turbine (16) verbunden ist und in welcher ein Vorwärmventil (54) angeordnet ist für das Zuführen von Dampf zum Vorwärmen der Turbine.

**Revendications**

1. Récipient de mise en route (10) comprenant:
- un ballon inférieur (15) délimitant un espace inférieur;
- un ballon supérieur (17) délimitant un espace supérieur;
- une section moyenne (25) à diamètre de section transversale inférieur à celui des ballons inférieur et supérieur (15, 17), la section moyenne définissant un espace moyen et étant reliée entre les ballons supérieur et inférieur;
- un moyen de chauffage (11) associé au ballon inférieur (15) pour chauffer l'eau présente dans l'espace inférieur;
- au moins un raccordement de conduit d'admission (136) relié à l'un des espaces supérieur, inférieur et moyen pour introduire dans l'espace inférieur de l'eau alimentaire que le moyen de chauffage (11) doit chauffer pour produire de la vapeur; et
- au moins un raccordement de conduit de sortie (130) relié à l'un des espaces supérieur, inférieur et moyen pour évacuer de la vapeur.

2. Récipient de mise en route selon la revendication 1, dans lequel le ballon inférieur (15) est de plus faible diamètre que le ballon supérieur (17) et les ballons tant supérieur qu' inférieur sont de forme générale sphérique.

3. Récipient de mise en route selon la revendication 1 ou la revendication 2, dans lequel le moyen de chauffage (11) comprend une série de dispositifs de chauffage par immersion pénétrant dans l'espace inférieur.

4. Récipient de mise en route selon la revendication 1, la revendication 2 ou la revendication 3, dans lequel le raccordement de conduit d'entrée comprend une conduite d'eau alimentaire (136) traversant le ballon inférieur (15) et une conduite de distribution (21) s'étendant vers le haut depuis le conduite d'eau alimentaire (136) jusque dans l'espace moyen, la conduite de distribution (21) présentant une série d'ouvertures (23) réparties verticalement sur sa longueur pour mélanger l'eau alimentaire arrivant à travers la conduite d'eau alimentaire avec la vapeur présente dans les espaces supérieur, inférieur et médian.

5. Récipient de mise en route selon la revendication 4, comportant une conduite d'eau alimentaire auxiliaire (134) montée à travers le ballon supérieur (17) et comportant à son extrémité au moins un ajutage (19) pour la pulvérisation d'eau alimentaire à l'intérieur de l'espace supérieur.

6. Récipient de mise en route selon la revendication 4 ou 5, comportant un raccordement d'admission de vapeur principal (132) relié au ballon supérieur (17) et un raccordement d'égalsation de pression statique (130) relié au ballon supérieur.

7. Récipient de mise en route selon la revendication 4, la revendication 5 ou la revendication 6, comportant un raccordement de conduite de purge (124) relié au ballon inférieur (15) et un raccordement de purge d'eau alimentaire (138) relié au ballon inférieur.

8. Système de mise en route de condensation à reflux comtprenant:
- un récipient de mise en route (10) selon l'une quelconque des revendications 1 à 7, dans lequel le raccordement de conduit d'admission (136) constitue une entrée d'eau alimentaire pour l'admission d'eau et le raccordement de conduit de sortie (130) constitue une sortie de vapeur pour l'évacuation de vapeur;
- un générateur de vapeur (12) présentant une entrée de fluide de transmission de chaleur pour l'introduction d'un fluide de transmission de chaleur, une sortie de fluide de transmission de chaleur pour l'évacuation du fluide de transmission de chaleur, une entrée d'eau alimentaire pour l'admission d'eau et une sortie de vapeur pour l'évacuation de vapeur;
- une conduite de vapeur principale (106) reliée aux sorties de vapeur du générateur de vapeur (12) et du récipient de mise en route (10);
- une turbine à vapeur (16) présentant une entrée reliée à la conduite de vapeur principale (106) et à une sortie;
- un condenseur de vapeur (20) relié à la sortie de turbine (16);
- une conduite de retour de vapeur (112) montée entre la sortie de la turbine (16) et une entrée de condenseur (20);
- une conduite.d'eau alimentaire (140) montée entre une sortie du condenseur (20) et l'entrée d'eau alimentaire du générateur de vapeur (12);
- au moins une pompe alimentaire montée dans la conduite d'eau alimentaire (140) pour refouler de l'eau vers le générateur de vapeur (12);
- une conduite de mise en route (116) montée entre la conduite d'eau alimentaire (140) en un point de raccordement situé en aval de la pompe, et la conduite de retour de vapeur (112);
- une vanne de conduite de mise en route (62) posée sur la conduite de mise en route (116);
- une vanne d'entrée de générateur de vapeur (68) posée sur la conduite d'eau alimentaire (140) en aval dudit point de raccordement;
- une conduite d'entrée de récipient de mise en route (136) montée entre l'entrée d'eau alimentaire du récipient de mise en route (10) et la conduite de mise en route (116);

- une vanne d'entrée de récipient de mise en route (64) posée sur la conduite d'admission du récipient de mise en route (136); et

- une vanne de sortie de récipient de mise en route (66) posée entre la sortie de vapeur du récipient de mise en route (10) et la conduite de vapeur principale (106);

- de sorte qu'on peut positionner sélectivement les vannes et qu'on peut faire agir le moyen de chauffage du récipient de mise en route (11) pour faire arriver de l'eau alimentaire au récipient de mise en route (10) pour engendrer de la vapeur qui est envoyée à la ligne de vapeur (106) et au générateur de vapeur (12) pour échauffer la turbine (16) et en amorcer le fonctionnement.

9. Système de mise en route de condensation à reflux selon la revendication 8, comportant un dispositif de chauffage d'eau alimentaire sous haute pression (28) associé à la conduite d'eau alimentaire (140), un dispositif de chauffage dégazeur (24) associé à la conduite d'eau alimentaire (140), un dispositif de chauffage d'eau alimentaire sous basse pression (26) associé à la conduite d'eau alimentaire (140) et placé en amont du dispositif de chauffage dégazeur (24), et des conduites d'extraction (110) et un système de chauffage d'eau alimentaire à régénération pour l'extraction de vapeur à partir de divers étages de la turbine (16) et relié aux dispositifs de chauffage d'eau alimentaire (28,26) qui sont montés en série avec la conduite d'eau alimentaire (140), les conduites d'extraction (110) étant reliées à travers les dispositifs de chauffage d'eau alimentaire (28, 26) et un purgeur de dispositif de chauffage d'eau alimentaire (118) à la conduite de retour de vapeur (112).

10. Système de mise en route de condensation à reflux selon la revendication 9, comportant un épurateur (22) interposé sur la conduite d'eau alimentaire (140), la ou les pompes comprenant une pompe de condenseur (46) placée entre le condenseur (20) et l'épurateur (22).

11. Système de mise en route de condensation à reflux selon la revendication 10, comportant une pompe d'eau alimentaire principale (42) montée sur la conduite d'eau alimentaire (140) entre le dispositif de chauffage dégazeur (24) et le dispositif de chauffage d'eau alimentaire sous haute pression (28) et une pompe de mise en route (44) reliée en parallèle à la pompe d'eau alimentaire principale (42).

12. Système de mise en route de condensation à reflux selon l'une quelconque des revendications 8 à 11, comportant une conduite d'évent de générateur de vapeur (122) montée sur la conduite d'eau alimentaire (140) en aval de la vanne d'entrée de générateur de vapeur (68), l'entrée d'eau alimentaire du récipient de mise en route (10) étant reliée au récipient de mise en route à un niveau situé plus bas que le raccordement entre la conduite de purge (122) et la conduite d'eau alimentaire (140), et une vanne d'évent (72) interposée sur la conduite d'évent (122) de sorte que l'eau arrivant au récipient de mise en route (10) via la conduite d'eau alimentaire (140) remplit le récipient (10) jusqu'au niveau du raccordement entre la conduite d'évent (122) et la conduite d'eau alimentaire (140).

13. Système de mise en route de condensation à reflux selon l'une quelconque des revendications 8 à 12, comportant une conduite de franchissement en dérivation de turbine (114) montée entre la conduite de vapeur principale (106) et la conduite de retour de vapeur (112) et comportant une vanne de franchissement en dérivation de turbine (56) et un désurchauffeur (30).

14. Système de mise en route de condensation à reflux selon la revendication 13, comportant une conduite de pré-échauffement de turbine (108) montée entre la conduite de vapeur principale (106) et la turbine (16) et comportant une vanne de pré-échauffement (54) montée sur elle pour amener de la vapeur pour le pré-échauffement de la turbine.

FIG. 1

FIG. 2